(19)

**Europäisches Patentamt**

**European Patent Office**

**Office européen des brevets**

(11) **EP 4 074 738 B1**

(12) **EUROPEAN PATENT SPECIFICATION**

(45) Date of publication and mention
of the grant of the patent:
**07.08.2024  Bulletin 2024/32**

(21) Application number: **21747512.8**

(22) Date of filing: **20.01.2021**

(51) International Patent Classification (IPC):
**C08F 220/18** (2006.01)     **C08F 222/16** (2006.01)

(52) Cooperative Patent Classification (CPC):
(C-Sets available)
**C08F 220/1802**                        (Cont.)

(86) International application number:
**PCT/JP2021/001822**

(87) International publication number:
**WO 2021/153372 (05.08.2021 Gazette 2021/31)**

(54) **ACRYLIC RUBBER, RUBBER COMPOSITION, CROSSLINKED PRODUCT OF SAME, AND RUBBER HOSE**

ACRYLKAUTSCHUK, KAUTSCHUKZUSAMMENSETZUNG, VERNETZTES PRODUKT DERSELBEN UND GUMMISCHLAUCH

CAOUTCHOUC ACRYLIQUE, COMPOSITION DE CAOUTCHOUC, PRODUIT RÉTICULÉ DE CELUI-CI, ET TUYAU EN CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2020   JP 2020013734**

(43) Date of publication of application:
**19.10.2022   Bulletin 2022/42**

(73) Proprietor: **Denka Company Limited**
**Tokyo 103-8338 (JP)**

(72) Inventors:
• **NAKANO Tatsuya**
**Tokyo 103-8338 (JP)**
• **HORIGUCHI Tatsunori**
**Tokyo 103-8338 (JP)**
• **KAWASAKI Takashi**
**Tokyo 103-8338 (JP)**
• **MIYAUCHI Toshiaki**
**Tokyo 103-8338 (JP)**

(74) Representative: **Hoffmann Eitle**
**Patent- und Rechtsanwälte PartmbB**
**Arabellastraße 30**
**81925 München (DE)**

(56) References cited:
**EP-A1- 4 015 545          WO-A1-2012/099117**
**WO-A1-2018/147142    WO-A1-2019/078167**
**WO-A1-2019/078167    JP-A- 2001 192 420**
**JP-A- 2002 187 901      JP-A- 2011 006 509**
**US-A1- 2004 048 970**

(52) Cooperative Patent Classification (CPC): (Cont.)

C-Sets
**C08F 220/1802, C08F 220/1804, C08F 222/16;
C08F 220/1802, C08F 220/1804, C08F 222/16,
C08F 210/02**

## Description

### Technical Field

The present disclosure relates to an acrylic rubber, a rubber composition and a crosslinked product thereof, and a rubber hose.

### Background Art

Acrylic rubbers and crosslinked products thereof are excellent in physical properties such as heat resistance, oil resistance, and mechanical properties, and thus are widely used, for example, as materials for hose members in engine rooms of automobiles. One of the characteristics required for such crosslinked products of acrylic rubbers is that cracks do not easily occur when the crosslinked product is bent (referred to as flex fatigue resistance). For example, Patent Document 1 discloses an acrylic rubber composition in which a anti-aging agent, a carbon black, and a crosslinking agent are added to an acrylic rubber as an acrylic rubber composition capable of providing a crosslinked product excellent in flex fatigue resistance and the like. Patent Documents 2-4 disclose rubber hoses comprising a cross-linked product of a rubber composition comprising an acrylic rubber comprising ethyl acrylate, n-butyl acrylate, ethylene and monobutyl maleate

### Citation List

#### Patent Document

[Patent Document 1] Japanese Unexamined Patent Application Publication No. 2012-211239 Patent Document 2: JP 2001192420 A, Patent Document 3: US 2004/048970 A1, Patent Document 4: WO 2019/078167 A1.

### Summary of Invention

#### Technical Problem

In Patent Document 1 described above, flex fatigue resistance is improved by making the acrylic rubber composition have a specific composition. However, according to studies by the present inventors, there is room for improving flex fatigue resistance in the acrylic rubber itself.
Accordingly, an object of one aspect of the present invention is to provide an acrylic rubber capable of improving flex fatigue resistance of a crosslinked product.

#### Solution to Problem

The present inventors have found that, in an acrylic rubber containing ethyl acrylate and n-butyl acrylate as monomer units, when the mass ratio of the content of ethyl acrylate to the content of n-butyl acrylate and the content of a toluene-insoluble component contained in the acrylic rubber are within specific ranges, the flex fatigue resistance of a crosslinked product can be improved compared to a case where the mass ratio and the content of the toluene-insoluble component are outside the ranges.
One aspect of the present invention is an acrylic rubber containing ethyl acrylate and n-butyl acrylate as monomer units and containing a toluene-insoluble component, wherein a mass ratio of a content of the ethyl acrylate to a content of the n-butyl acrylate is 2.5 or more and 8 or less, wherein a Mooney viscosity of the acrylic rubber is 50 or less, and a content of the toluene-insoluble component is 5% by mass or less based on a total amount of the acrylic rubber.
The acrylic rubber may contain methacrylate as the monomer units. The acrylic rubber may further contain ethylene as the monomer units. The acrylic rubber may further contain a crosslinking monomer having a carboxyl group as the monomer units.
The acrylic rubber may contain, as the monomer units, only the ethyl acrylate, the n-butyl acrylate, ethylene, and a crosslinking monomer having a carboxyl group. In this case, a content of the ethyl acrylate may be 70 to 90% by mass based on a total amount of the monomer units. A content of the n-butyl acrylate may be 10 to 30% by mass based on a total amount of the monomer units. A content of the ethylene may be 0.5 to 5% by mass based on a total amount of monomer units. A content of the crosslinking monomer may be 0.5 to 5% by mass based on a total amount of the monomer units.
Another aspect of the present invention is a rubber composition containing the acrylic rubber described above. Another aspect of the present invention is a crosslinked product of the rubber composition. Another aspect of the present invention is a rubber hose containing the crosslinked product.

## Advantageous Effects of Invention

According to one aspect of the present invention, it is possible to provide an acrylic rubber capable of improving flex fatigue resistance of a crosslinked product.

## Description of Embodiments

One embodiment of the present invention is an acrylic rubber containing ethyl acrylate and n-butyl acrylate as monomer units.

The content of ethyl acrylate may be preferably 70% by mass or more, 72% by mass or more, 74% by mass or more, or 76% by mass or more, based on the total amount of the monomer units contained in the acrylic rubber, from the viewpoint of improving tensile strength of a crosslinked product of the acrylic rubber (a composition containing the acrylic rubber) (hereinafter, also simply referred to as "crosslinked product"). The content of ethyl acrylate may be preferably 90% by mass or less, 87% by mass or less, 85% by mass or less, or 82% by mass or less, based on the total amount of the monomer units contained in the acrylic rubber, from the viewpoint of improving cold resistance of the crosslinked product. The content of ethyl acrylate may be 70 to 90% by mass, 70 to 87% by mass, 70 to 85% by mass, 70 to 82% by mass, 72 to 90% by mass, 72 to 87% by mass, 72 to 85% by mass, 72 to 82% by mass, 74 to 90% by mass, 74 to 87% by mass, 74 to 85% by mass, 74 to 82% by mass, 76 to 90% by mass, 76 to 87% by mass, 76 to 85% by mass, or 76 to 82% by mass, based on the total amount of the monomer units contained in the acrylic rubber.

The total content of ethyl acrylate and n-butyl acrylate may be 90% by mass or more, 93% by mass or more, 95% by mass or more, or 96% by mass or more, may be 99.5% by mass or less, or 99% by mass or less, and may be 90 to 99.5% by mass, 90 to 99% by mass, 93 to 99.5% by mass, 93 to 99% by mass, 95 to 99.5% by mass, 95 to 99% by mass, 96 to 99.5% by mass, or 96 to 99% by mass, based on the total amount of the monomer units contained in the acrylic rubber.

The content of n-butyl acrylate may be preferably 10% by mass or more, 12% by mass or more, or 15% by mass or more, based on the total amount of the monomer units contained in the acrylic rubber, from the viewpoint of improving cold resistance of the crosslinked product. The content of n-butyl acrylate may be preferably 30% by mass or less, 25% by mass or less, or 22% by mass or less, based on the total amount of the monomer units contained in the acrylic rubber, from the viewpoint of improving tensile strength of the crosslinked product. The content of n-butyl acrylate may be 10 to 30% by mass, 10 to 25% by mass, 10 to 22% by mass, 12 to 30% by mass, 12 to 25% by mass, 12 to 22% by mass, 15 to 30% by mass, 15 to 25% by mass, or 15 to 22% by mass, based on the total amount of the monomer units contained in the acrylic rubber.

The mass ratio of the content of ethyl acrylate to the content of n-butyl acrylate in the monomer units (content (mass) of ethyl acrylate / content (mass) of n-butyl acrylate) is 2.5 or more, and may be preferably 3 or more, 3.5 or more, 3.8 or more, 4 or more, or 4.1 or more, from the viewpoint of further improving flex fatigue resistance of the crosslinked product and improving tensile strength of the crosslinked product. The mass ratio is 8 or less, and may be preferably 6 or less, or 5 or less, from the viewpoint of improving cold resistance of the crosslinked product.

The acrylic rubber may further contain ethylene as the monomer units. The content of ethylene may be 0.5% by mass or more, 0.7% by mass or more, or 1% by mass or more, and may be 5% by mass or less, 4% by mass or less, or 3% by mass or less, based on the total amount of the monomer units contained in the acrylic rubber. The content of ethylene may be 0.5 to 5% by mass, 0.5 to 4% by mass, 0.5 to 3% by mass, 0.7 to 5% by mass, 0.7 to 4% by mass, 0.7 to 3% by mass, 1 to 5% by mass, 1 to 4% by mass, or 1 to 3% by mass, based on the total amount of the monomer units contained in the acrylic rubber.

The acrylic rubber may further contain a crosslinking monomer having a carboxyl group as the monomer units. The crosslinking monomer is a monomer copolymerizable with ethyl acrylate and n-butyl acrylate, and having a carboxyl group to form a crosslinking site (also referred to as a crosslinking point). The crosslinking monomer has a polymerizable carbon-carbon double bond and has, for example, an acryloyl group, a methacryloyl group, an allyl group, a methallyl group, a vinyl group, or an alkenylene group.

Examples of the crosslinking monomer having a carboxyl group include acrylic acid, methacrylic acid, crotonic acid, 2-pentenoic acid, maleic acid, fumaric acid, itaconic acid, and a monoalkyl maleate.

The content of the crosslinking monomer may be 0.5% by mass or more, 0.7% by mass or more, or 1% by mass or more, and may be 5% by mass or less, 4% by mass or less, or 3% by mass or less, based on the total amount of the monomer units contained in the acrylic rubber. The content of the crosslinking monomer may be 0.5 to 5% by mass, 0.5 to 4% by mass, 0.5 to 3% by mass, 0.7 to 5% by mass, 0.7 to 4% by mass, 0.7 to 3% by mass, 1 to 5% by mass, 1 to 4% by mass, or 1 to 3% by mass, based on the total amount of the monomer units contained in the acrylic rubber.

The acrylic rubber may further contain, as the monomer units, additional monomers other than the monomers described above.

Examples of the additional monomer include an alkyl acrylate other than ethyl acrylate and n-butyl acrylate, an alkyl methacrylate, an alkoxyalkyl (meth)acrylate, a fluorine-containing (meth)acrylate, a hydroxyl group-containing (meth)acrylate, a tertiary amino group-containing (meth)acrylate, an alkyl methacrylate, an alkyl vinyl ketone, a vinyl ether, an allyl ether, an aromatic vinyl compound, a vinyl nitrile, a halogenated vinyl, and a halogenated vinylidene.

Examples of the alkyl acrylate other than ethyl acrylate and n-butyl acrylate include methyl acrylate, n-propyl acrylate, isobutyl acrylate, n-pentyl acrylate, isoamyl acrylate, n-hexyl acrylate, 2-methylpentyl acrylate, n-octyl acrylate, and 2-ethylhexyl acrylate. Examples of the alkyl methacrylate include methyl methacrylate and octyl methacrylate.

Examples of the alkoxyalkyl (meth)acrylate include 2-methoxyethyl (meth)acrylate, 2-ethoxyethyl (meth)acrylate, 2-(n-propoxy)ethyl (meth)acrylate, 2-(n-butoxy)ethyl (meth)acrylate, 3-methoxypropyl (meth)acrylate, 3-ethoxypropyl (meth)acrylate, 2-(n-propoxy)propyl (meth)acrylate, and 2-(n-butoxy) propyl (meth)acrylate.

Examples of the fluorine-containing (meth)acrylate include 1,1-dihydroperfluoroethyl (meth)acrylate, 1,1-dihydroperfluoropropyl (meth)acrylate, 1,1,5-trihydroperfluorohexyl (meth)acrylate, 1,1,2,2-tetrahydroperfluoropropyl (meth)acrylate, 1,1,7-trihydroperfluoroheptyl (meth)acrylate, 1,1-dihydroperfluorooctyl (meth)acrylate, and 1,1-dihydroperfluorodecyl (meth)acrylate.

Examples of the hydroxyl group-containing (meth)acrylate include 1-hydroxypropyl (meth)acrylate, 2-hydroxypropyl (meth)acrylate, and hydroxyethyl (meth)acrylate. Examples of the tertiary amino group-containing (meth)acrylate include diethylaminoethyl (meth)acrylate and dibutylaminoethyl (meth)acrylate.

Examples of the alkyl vinyl ketone include methyl vinyl ketone. Examples of the vinyl ether include vinyl ethyl ether. Examples of the allyl ether include allyl methyl ether. Examples of the aromatic vinyl compound include styrene, α-methylstyrene, chlorostyrene, and vinyltoluene. Examples of the vinyl nitrile include acrylonitrile and methacrylonitrile. Examples of the vinyl halide include vinyl chloride and vinyl fluoride. Examples of the vinylidene halide include vinylidene chloride and vinylidene fluoride.

The content of the additional monomer may be 1% by mass or more and may be 10% by mass or less, based on the total amount of monomer units contained in the acrylic rubber.

The acrylic rubber preferably contains no methacrylate as the monomer units. The acrylic rubber more preferably contains only ethyl acrylate, n-butyl acrylate, ethylene, and a crosslinking monomer having a carboxyl group, as the monomer units.

The acrylic rubber is obtained by copolymerizing the monomers described above by a known method such as an emulsion polymerization or a suspension polymerization, and more specifically, for example, is obtained by the following method.

First, a monomer mixed liquid containing ethyl acrylate and n-butyl acrylate is mixed with an aqueous solution of an emulsifier (e.g., an aqueous solution of a polyvinyl alcohol) in a reactor to prepare a suspension. Subsequently, after the inside of the reactor is replaced with nitrogen gas, ethylene is injected into the reactor at a pressure of, for example, 0.5 to 5MPa, if necessary. Thereafter, a polymerization initiator is added to the suspension while stirring the suspension to initiate polymerization, and the polymerization is allowed to proceed, for example, at 40 to 100°C for 1 to 24 hours. A coagulant (an aqueous sodium borate solution) is added to the obtained copolymer to solidify the copolymer, and then washing, dehydrating and drying processes of the copolymer with water are performed in this order to obtain an acrylic rubber. In the case of obtaining the acrylic rubber by such a method, a method of preparing a suspension by mixing a monomer mixed liquid with an aqueous solution of an emulsifier in advance tends to further reduce the toluene-insoluble content described below as compared with a method of adding a monomer mixed liquid to a suspension after preparing a suspension by mixing an aqueous solution of an emulsifier in advance.

The emulsifier may be, for example, a polyvinyl alcohol, and may also be other surfactants. Examples of other surfactants include salts of fatty acids such as myristic acid, palmitic acid, oleic acid, and linolenic acid; alkylbenzenesulfonates such as sodium dodecylbenzenesulfonate; higher alcohol sulfates such as sodium lauryl sulfate; higher phosphate salts such as sodium alkylphosphates; alkylsulfosuccinates; polyoxyethylene alkyl ethers such as polyoxyethylene dodecyl ethers; polyoxyethylene alkylphenol ethers such as polyoxyethylene nonylphenyl ethers; polyoxyethylene alkyl esters; polyoxyethylene sorbitan alkyl esters; polyoxyethylene polyoxypropylene glycols; and polyethylene glycol monostearates. When these surfactants are used as an emulsifier, the content of the toluene-insoluble component tends to be further reduced as compared with the case where a polyvinyl alcohol is used as an emulsifier.

The monomer mixed liquid may further contain the above-described monomers constituting the acrylic rubber (excluding gaseous monomers such as ethylene) in addition to ethyl acrylate and n-butyl acrylate, if necessary.

A pH adjusting agent may be further added to the suspension. The pH adjuster may be, for example, an alkali metal salt such as sodium acetate, sodium hydroxide, potassium hydroxide, sodium phosphate, or sodium citrate, and is preferably sodium acetate. The amount of the pH adjuster added, for example, may be 0.1 parts by mass or more, and may be 5 parts by mass or less, with respect to 100 parts by mass of the total amount of monomers constituting the acrylic rubber.

The polymerization initiator may be, for example, an azo compound such as azobisisobutyronitrile, an organic peroxide such as tert-butyl hydroperoxide, cumene hydroperoxide, and benzoyl peroxide, or an inorganic peroxide such as sodium persulfate or ammonium persulfate, and is preferably tert-butyl hydroperoxide. The amount of the polymerization initiator added, for example, may be 0.01 parts by mass or more, and may be 2 parts by mass or less, with respect to 100 parts by mass of the total amount of the monomers constituting the acrylic rubber.

The content of the toluene-insoluble component in the acrylic rubber obtained as described above is 5% by mass or less based on the total amount of the acrylic rubber from the viewpoint of improving the flex fatigue resistance of the crosslinked product, and is preferably 4.5% by mass or less, more preferably 4% by mass or less, even more preferably 3.5% by mass or less, and particularly preferably 3% by mass or less, from the viewpoint of further improving the flex fatigue resistance of the crosslinked product. The content of the toluene-insoluble component in the acrylic rubber is preferably 0.1% by mass or more, more preferably 0.5% by mass or more, even more preferably 1% by mass or more, and particularly preferably 1.5% by mass or more, based on the total amount of the acrylic rubber, from the viewpoint of improving the moldability of the crosslinked product.

The content of the toluene-insoluble component in the acrylic rubber is measured as follows:

1g of the acrylic rubber is accurately weighed and dissolved in 100 mL of toluene at a temperature of 25°C over 48 hours, and then the solution is transferred to a centrifugal tube having a volume 250mL whose weight ($X$ (g)) has been measured in advance. Subsequently, using an angle rotor having a maximum centrifugal radius of 13.8 cm, the solution is centrifuged under conditions of a temperature of 10°C, 8500 rpm, and 60 minutes, and then a non-precipitate is removed by decanting. The precipitate in the centrifuge tube is dried in a vacuum dryer at a temperature of 70°C for 24 hours, and the mass of the dried centrifuge tube (referred to as $Y$ (g)) is measured. The toluene-insoluble component is calculated from the measured $X$ and $Y$ by the following formula:

$$\text{Toluene-insoluble component (\% by mass)} = (Y - X) \times 100$$

As described above, the toluene-insoluble component in the acrylic rubber can be adjusted by the order of mixing when the monomer mixed liquid and the aqueous solution of the emulsifier are mixed to prepare the suspension. The toluene-insoluble component in the acrylic rubber can also be adjusted by the mass ratio of the content of ethyl acrylate to the content of n-butyl acrylate in the monomer units contained in the acrylic rubber. As the mass ratio is larger, the toluene-insoluble component in the acrylic rubber tends to be smaller.

The Mooney viscosity of the acrylic rubber, for example, may be 10 or more, 20 or more, or 30 or more, and is 50 or less. The Mooney viscosity of the acrylic rubber is a value measured in accordance with the method specified in JIS K6300, and specifically, refers to a value measured at 100°C after preheating for 1 minute and after 4 minutes from the start of rotation using an L-type rotor.

The acrylic rubber described above is used as a rubber composition in combination with other components as necessary. That is, another embodiment of the present invention is a rubber composition containing the above-described acrylic rubber (and other components used as necessary). The content of the acrylic rubber, for example, may be 50% by mass or more, 55% by mass or more, or 60% by mass or more, and may be 90% by mass or less, based on the total amount of the rubber composition.

Other components that may be contained in the rubber composition include, for example, a filler, a lubricant, an anti-aging agent, a surfactant, a crosslinking agent, and a crosslinking accelerator.

Examples of the filler include a carbon black, a silica, a talc, and calcium carbonate. The content of the filler, for example, may be 30 parts by mass or more, and may be 100 parts by mass or less, with respect to 100 parts by mass of the acrylic rubber.

Examples of the lubricant include a liquid paraffin, stearic acid, a stearylamine, a zinc fatty acid, a fatty acid ester, and an organosilicone. The content of the lubricant, for example, may be 0.1 parts by mass or more, and may be 10 parts by mass or less, with respect to 100 parts by mass of the acrylic rubber.

Examples of the anti-aging agent include an aromatic amine compound and a phenol compound. The content of the anti-aging agent, for example, may be 0.1 parts by mass or more, and may be 10 parts by mass or less, with respect to 100 parts by mass of the acrylic rubber.

Examples of the surfactant include an alkyl sulfate ester salt. The content of the surfactant, for example, may be 0.1 parts by mass or more, and may be 10 parts by mass or less, with respect to 100 parts by mass of the acrylic rubber.

Examples of the crosslinking agent include an imidazole compound and a diamine compound. The content of the crosslinking agent, for example, may be 0.1 parts by mass or more, and may be 10 parts by mass or less, with respect to 100 parts by mass of the acrylic rubber.

The crosslinking accelerator is preferably used when the rubber composition contains a crosslinking agent. Examples of the crosslinking accelerator include a trimethylthiourea compound, a phenothiazine compound, and a guanidine compound. The content of the crosslinking accelerator, for example, may be 0.1 parts by mass or more, and may be 10 parts by mass or less, with respect to 100 parts by mass of the acrylic rubber.

The rubber composition is suitably used in a crosslinked state (as a crosslinked product). That is, another embodiment of the present invention is a crosslinked product of the above rubber composition. The crosslinked product is obtained by crosslinking the rubber composition. In the crosslinked product, crosslinking between the acrylic rubbers is formed by crosslinking sites (crosslinking points) of the crosslinking monomer contained as the monomer units in the acrylic rubber. In the case where the rubber composition contains a crosslinking agent, crosslinking between the acrylic rubbers is further formed by the crosslinking agent.

The method of crosslinking the rubber composition may be a known method, and may contain, for example, a first crosslinking step of heating and pressurizing the rubber composition, and a second crosslinking step of further heating the rubber composition after the first crosslinking step.

In the first crosslinking step, the heating temperature, for example, may be 150°C or more, and may be 220°C or less. The pressure of the pressurization, for example, may be 0.4 MPa or more, and may be 20 MPa or less. The heating and pressurizing time, for example, may be 5 minutes or more, and may be 2 hours or less.

In the second crosslinking step, the heating temperature, for example, may be 150°C or more, and may be 220°C or less. The heating time, for example, may be 30 minutes or more and may be 24 hours or less.

The crosslinked product of the rubber composition is suitably used as a rubber hose or a seal member such as a gasket, a packing, and is particularly suitably used as a rubber hose. That is, another embodiment of the present invention is a rubber hose or a seal member containing the crosslinked product, and is preferably a rubber hose containing the crosslinked product. The rubber hose and the seal member may consist of only the crosslinked product of the rubber composition, or may contain the crosslinked product and another member.

Examples of the rubber hose include a transmission oil cooler hose, an engine oil cooler hose, an air duct hose, a turbo intercooler hose, a hot air hose, a radiator hose, a power steering hose, a fuel system hose, and a drain system hose for automobiles, construction machines, hydraulic equipment.

Examples of the seal member include an engine head cover gasket, an oil pan gasket, an oil seal, a lip seal packing, an O-ring, a transmission seal gasket, a crankshaft, a camshaft seal gasket, a valve stem, a power steering seal belt cover seal, a boot material for a constant-velocity joint, a rack-and-pinion boot material.

**Examples**

Hereinafter, the present invention will be described in more detail with reference to examples, but the present invention is not limited to these examples.

<Examples 1 to 5> (Examples 3 and 4 are Reference examples)

A pressure-resistant reactor having an internal volume of 40 liters was charged with 11 kg of a monomer mixed liquid containing monomers shown in Table 1 (excluding ethylene), 17 kg of 4% by mass of an aqueous polyvinyl alcohol solution, and 22 g of sodium acetate, and these were thoroughly mixed in advance with a stirrer to prepare uniform suspensions. Then, after the upper portion of the reactor was replaced with nitrogen, ethylene was injected into the upper portion of the reactor by 3 MPa (excluding Example 5). After stirring was continued and the temperature in the reactor was maintained at 55°C, 2 liters of an aqueous t-butyl hydroperoxide solution (0.25% by mass) was added to initiate polymerization. The temperature inside the reactor was maintained at 55°C, and the reaction was terminated after 6 hours. To the obtained copolymer, 7 liters of an aqueous sodium borate solution (3.5% by mass) was added to solidify the copolymer. The solidified copolymer was washed with water, thereafter, dehydration and drying were performed to obtain an acrylic rubber.

<Comparative Examples 1 and 2>

A pressure-resistant reactor having an internal volume of 40 liters was charged with 17 kg of 4% by mass of an aqueous polyvinyl alcohol solution, and 22 g of sodium acetate, and these were thoroughly mixed in advance with a stirrer to prepare uniform suspensions. Then, after the upper portion of the reactor was replaced with nitrogen, ethylene was injected into the upper portion of the reactor by 3 MPa. After stirring was continued and the temperature in the reactor was maintained at 55°C, 11 kg of a monomer mixed liquid containing monomers shown in Table 1 (excluding ethylene), and 2 liters of an aqueous t-butyl hydroperoxide solution (0.25% by mass) was added over 6 hours to initiate polymerization. The temperature inside the reactor was maintained at 55°C, and the reaction was terminated after 6 hours. To the obtained copolymer, 7 liters of an aqueous sodium borate solution (3.5% by mass) was added to solidify the copolymer. The solidified copolymer was washed with water, thereafter, dehydration and drying were performed to obtain an acrylic rubber.

<Comparative Example 3>

A pressure-resistant reactor having an internal volume of 40 liters was charged with 1 kg of a monomer mixed liquid containing monomers shown in Table 1 (excluding ethylene), 17 kg of 4% by mass of an aqueous polyvinyl alcohol solution, and 22 g of sodium acetate, and these were thoroughly mixed in advance with a stirrer to prepare uniform suspensions. Then, after the upper portion of the reactor was replaced with nitrogen, ethylene was injected into the upper portion of the reactor by 3 MPa. After stirring was continued and the temperature in the reactor was maintained at 55°C, 10 kg of a monomer mixed liquid containing monomers shown in Table 1 (excluding ethylene), and 2 liters of an aqueous t-butyl hydroperoxide solution (0.25% by mass) was added over 6 hours to initiate polymerization. The temperature inside the reactor was maintained at 55°C, and the reaction was terminated after 6 hours. To the obtained copolymer, 7 liters of an aqueous sodium borate solution (3.5% by mass) was added to solidify the copolymer. The solidified copolymer was washed with water, thereafter, dehydration and drying were performed to obtain an acrylic rubber.

The composition of the monomer units contained in the obtained acrylic rubbers is shown in Table 1. The contents of the monomer units were measured by nuclear magnetic resonance spectroscopy.

In addition, the content of the toluene-insoluble component in the obtained acrylic rubber and the Mooney viscosity ML (1+4) 100°C of the acrylic rubber were measured. The results are shown in Table 1.

The toluene-insoluble component was measured by the following method. First, 1g of the acrylic rubber was accurately weighed and dissolved in 100 mL of toluene at a temperature of 25°C over 48 hours, and then the solution was transferred to a centrifugal tube having a volume 250mL whose weight (X (g)) has been measured in advance. Subsequently, using an angle rotor having a maximum centrifugal radius of 13.8 cm, the solution was centrifuged under conditions of a temperature of 10°C, 8500 rpm, and 60 minutes, and then a non-precipitate was removed by decanting. The precipitate in the centrifuge tube was dried in a vacuum dryer at a temperature of 70°C for 24 hours, and the mass of the dried centrifuge tube (referred to as Y (g)) was measured. The toluene-insoluble component was calculated from the measured X and Y by the following formula:

$$\text{Toluene-insoluble component (\% by mass)} = (Y - X) \times 100$$

The Mooney Viscosity ML (1+4) 100°C was measured according to the method specified in JIS K6300.

Subsequently, 100 parts by mass of each obtained acrylic rubber, 45 parts by mass of filler (carbon black (Seast SO manufactured by Tokai Carbon Co., Ltd.)), 1 part by mass of lubricant a (liquid paraffin (Hycol K-230 manufactured by Kaneda Co., Ltd.)), 1 part by mass of lubricant b (paraffin wax (paraffin wax 135F manufactured by Nippon Seiro Co., Ltd.), 1 part by mass of lubricant c (stearic acid manufactured by NOF Corporation), 0.3 parts by mass of lubricant d (stearylamine (Farmin 80 manufactured by Kao Corporation)), 0.5 parts by mass of anti-aging agent a (4,4'-bis($\alpha,\alpha$-dimethylbenzyl) diphenylamine (Naugard #445 manufactured by Addivant), 1 part by mass of anti-aging agent b (N-phenyl-N'-isopropyl-p-phenylenediamine (Nocrac 810-NA manufactured by Ouchi Shinko Chemical Industrial Co., Ltd.)), 0.5 parts by mass of release agent (phosphoric acid ester compound (Moldwiz INT-21G manufactured by Tomoe Engineering Co., Ltd.)), 0.7 parts by mass of crosslinking agent (hexamethylenediamine carbamate (Diak #1 manufactured by DuPont)), and 1.5 parts by mass of crosslinking accelerator (XLA-60 manufactured by Lanxess) were kneaded with an 8-inch open roll to obtain a rubber composition.

The obtained rubber composition was dispensed into a sheet having a thickness of 2.4 mm, and then heated and pressurized at 170°C and 10 MPa for 20 minutes using a press vulcanizer. Subsequently, heating was carried out in a gear oven at 170°C for 4 hours to obtain a crosslinked product of the rubber composition.

(Evaluation of tensile strength of crosslinked product)

The tensile strength of the crosslinked product was measured in accordance with JIS K6251:2010.

(Evaluation of flex fatigue resistance of crosslinked product)

In accordance with JIS K6260:2010, the number of times of bending until a crack of 0.5mm was generated in the crosslinked product was measured in each of environments of 23°C and 100°C. The number of bending times was an average value of results obtained by performing the same measurement on five samples. The greater the number of bending times, the better the flex fatigue resistance.

(Evaluation of cold resistance of crosslinked product)

T100 of the crosslinked product was measured in accordance with JIS K6261:2006. T100 means a temperature at which the specific modulus of the crosslinked product at 23°C is 100 times as high as that at 23°C. The lower the T100 is, the better the cold resistance is.

(Evaluation of moldability)

The obtained rubber composition was molded into a tubular shape (inner radius: 9 mm, outer radius: 14 mm) using a rubber single-screw extruder (screw radius: 50 mm) under conditions of screw rotation speed: 20 rpm, head temperature: 110°C, cylinder temperature: 90°C, and hopper temperature: 70°C. With respect to the obtained tube, the weight W (g), the length L (cm) in the extrusion direction, and the density $\rho$ (g/cm$^3$) were measured, and the die swell DS (%) was calculated by the following formula:

$$DS = (W / L\rho S_0 - 1) \times 100$$

wherein $S_0$ is the area of the die (cm$^2$). The smaller the die swell, the more excellent the moldability.
Each of the evaluation results is shown in Table 1.

[Table 1]

| | | | Example 1 | Example 2 | Example 3 | Example 4 | Example 5 | Comp. Example 1 | Comp. Example 2 | Comp. Example 3 |
|---|---|---|---|---|---|---|---|---|---|---|
| Monomer composition of acrylic rubber (% by mass) | Ethyl acrylate | | 77.5 | 72.2 | 68.0 | 88.3 | 78.7 | 77.5 | 88.1 | 60.9 |
| | n-Butyl acrylate | | 19.1 | 24.3 | 28.5 | 8.4 | 19.4 | 19.1 | 8.6 | 35.8 |
| | Ethylene | | 1.5 | 1.6 | 1.6 | 1.5 | - | 1.5 | 1.5 | 1.5 |
| | Monobutyl maleate | | 1.9 | 1.9 | 1.9 | 1.8 | 1.9 | 1.9 | 1.8 | 1.8 |
| Mass ratio of ethyl acrylate / n-butyl acrylate | | | 4.1 | 3.0 | 2.4 | 10.5 | 4.1 | 4.1 | 10.2 | 1.7 |
| Content of toluene-insoluble component (% by mass) | | | 2.7 | 4.2 | 4.4 | 0.7 | 2.3 | 43 | 26 | 6.6 |
| Mooney Viscosity | | | 46 | 47 | 46 | 45 | 45 | 44 | 46 | 46 |
| Tensile strength (MPa) | | | 12.4 | 11.6 | 11.3 | 12.7 | 11.8 | 11.8 | 11.6 | 10.4 |
| Flex fatigue resistance | Number of bending times ($\times 10^4$ times) | 23°C | 129.1 | 106.2 | 105.7 | 142.9 | 118.3 | 21 | 29 | 97.3 |
| | | 100°C | 73.3 | 52.6 | 52.1 | 80.4 | 66.3 | 3.5 | 4.3 | 49.3 |
| Cold resistance | T100 (°C) | | -25 | -27 | -28 | -23 | -24 | -25 | -23 | -20 |
| Moldability | DS (%) | | 1.7 | 1.8 | 1.7 | 1.6 | 1.8 | 1.9 | 1.9 | 1.9 |

## Claims

1. An acrylic rubber comprising ethyl acrylate and n-butyl acrylate as monomer units and comprising a toluene-insoluble component,

   wherein a mass ratio of a content of the ethyl acrylate to a content of the n-butyl acrylate is 2.5 or more and 8 or less,
   wherein a Mooney viscosity of the acrylic rubber, measured using the method described in the description, is 50 or less and
   wherein a content of the toluene-insoluble component is 5% by mass or less based on a total amount of the acrylic rubber, wherein said content of the toluene-insoluble component is measured using the method described in the description.

2. The acrylic rubber according to claim 1, comprising no methacrylate as the monomer units.

3. The acrylic rubber according to claim 1 or 2, further comprising ethylene as the monomer units.

4. The acrylic rubber according to any one of claims 1 to 3, further comprising a crosslinking monomer having a carboxyl group as the monomer unit.

5. The acrylic rubber according to claim 1, comprising, as the monomer units, only the ethyl acrylate, the n-butyl acrylate, ethylene, and a crosslinking monomer having a carboxyl group.

6. The acrylic rubber according to claim 5, wherein a content of the ethyl acrylate is 70 to 90% by mass based on a total amount of the monomer units.

7. The acrylic rubber according to claim 5 or 6, wherein a content of the n-butyl acrylate is 10 to 30% by mass based on a total amount of the monomer units.

8. The acrylic rubber according to any one of claims 5 to 7, wherein a content of the ethylene is 0.5 to 5% by mas based on a total amount of the monomer units.

9. The acrylic rubber according to any one of claims 5 to 8, wherein a content of the crosslinking monomer is 0.5 to 5% by mass based on a total amount of the monomer units.

10. A rubber composition comprising the acrylic rubber according to any one of claims 1 to 9.

11. A crosslinked product of the rubber composition according to claim 10.

12. A rubber hose comprising the crosslinked product according to claim 11.

## Patentansprüche

1. Acrylkautschuk, umfassend Ethylacrylat und n-Butylacrylat als Monomereinheiten und umfassend eine toluolunlösliche Komponente,

   wobei ein Massenverhältnis von einem Gehalt an Ethylacrylat zu einem Gehalt an n-Butylacrylat 2,5 oder mehr und 8 oder weniger beträgt,
   wobei eine Mooney-Viskosität des Acrylkautschuks, gemessen unter Verwendung der in der Beschreibung beschriebenen Methode, 50 oder weniger beträgt, und
   wobei ein Gehalt der toluolunlöslichen Komponente 5 Massen-% oder weniger, bezogen auf eine Gesamtmenge des Acrylkautschuks, beträgt, wobei der Gehalt der toluolunlöslichen Komponente unter Verwendung der in der Beschreibung beschriebenen Methode gemessen wird.

2. Acrylkautschuk gemäß Anspruch 1, umfassend kein Methacrylat als Monomereinheit.

3. Acrylkautschuk gemäß Anspruch 1 oder 2, ferner umfassend Ethylen als Monomereinheit.

**4.** Acrylkautschuk gemäß einem der Ansprüche 1 bis 3, ferner umfassend ein vernetzendes Monomer mit einer Carboxylgruppe als Monomereinheit.

**5.** Acrylkautschuk gemäß Anspruch 1, umfassend als Monomereinheiten nur Ethylacrylat, n-Butylacrylat, Ethylen und ein vernetzendes Monomer mit einer Carboxylgruppe.

**6.** Acrylkautschuk gemäß Anspruch 5, wobei ein Gehalt an Ethylacrylat 70 bis 90 Massen-%, bezogen auf eine Gesamtmenge der Monomereinheiten, beträgt.

**7.** Acrylkautschuk gemäß Anspruch 5 oder 6, wobei ein Gehalt an n-Butylacrylat 10 bis 30 Massen-%, bezogen auf eine Gesamtmenge der Monomereinheiten, beträgt.

**8.** Acrylkautschuk gemäß einem der Ansprüche 5 bis 7, wobei ein Gehalt an Ethylen 0,5 bis 5 Massen-%, bezogen auf eine Gesamtmenge der Monomereinheiten, beträgt.

**9.** Acrylkautschuk gemäß einem der Ansprüche 5 bis 8, wobei ein Gehalt an vernetzendem Monomer 0,5 bis 5 Massen-%, bezogen auf eine Gesamtmenge der Monomereinheiten, beträgt.

**10.** Kautschukzusammensetzung, umfassend den Acrylkautschuk gemäß einem der Ansprüche 1 bis 9.

**11.** Vernetztes Produkt der Kautschukzusammensetzung gemäß Anspruch 10.

**12.** Gummischlauch, umfassend das vernetzte Produkt gemäß Anspruch 11.

**Revendications**

**1.** Caoutchouc acrylique comprenant de l'acrylate d'éthyle et de l'acrylate de n-butyle comme unités monomères et comprenant un composant insoluble dans le toluène,

dans lequel un rapport de masse entre une teneur en acrylate d'éthyle et une teneur en acrylate de n-butyle est de 2,5 ou plus et de 8 ou moins,
dans lequel une viscosité Mooney du caoutchouc acrylique, mesurée en utilisant le procédé décrit dans la description, est de 50 ou moins, et
dans lequel une teneur en composant insoluble dans le toluène est de 5 % en masse ou moins sur base d'une quantité totale du caoutchouc acrylique, dans lequel ladite teneur en composant insoluble dans le toluène est mesurée en utilisant le procédé décrit dans la description.

**2.** Caoutchouc acrylique selon la revendication 1, ne comprenant pas de méthacrylate comme unités monomères.

**3.** Caoutchouc acrylique selon la revendication 1 ou la revendication 2, comprenant en outre de l'éthylène comme unités monomères.

**4.** Caoutchouc acrylique selon l'une quelconque des revendications 1 à 3, comprenant en outre un monomère de réticulation présentant un groupe carboxyle comme unité monomère.

**5.** Caoutchouc acrylique selon la revendication 1, comprenant, comme unités monomères, uniquement l'acrylate d'éthyle, l'acrylate de n-butyle, l'éthylène et un monomère de réticulation présentant un groupe carboxyle.

**6.** Caoutchouc acrylique selon la revendication 5, dans lequel une teneur en acrylate d'éthyle est de 70 à 90 % en masse sur base d'une quantité totale des unités monomères.

**7.** Caoutchouc acrylique selon la revendication 5 ou la revendication 6, dans lequel une teneur en acrylate de n-butyle est de 10 à 30 % en masse sur base d'une quantité totale des unités monomères.

**8.** Caoutchouc acrylique selon l'une quelconque des revendications 5 à 7, dans lequel une teneur en éthylène est de 0,5 à 5 % en masse sur base d'une quantité totale des unités monomères.

9. Caoutchouc acrylique selon l'une quelconque des revendications 5 à 8, dans lequel une teneur en monomère de réticulation est de 0,5 à 5 % en masse sur base d'une quantité totale des unités monomères.

10. Composition de caoutchouc comprenant le caoutchouc acrylique selon l'une quelconque des revendications 1 à 9.

11. Produit réticulé de la composition de caoutchouc selon la revendication 10.

12. Tuyau en caoutchouc comprenant le produit réticulé selon la revendication 11.

**EP 4 074 738 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012211239 A
- JP 2001192420 A
- US 2004048970 A1
- WO 2019078167 A1